# EUROPÄISCHE PATENTANMELDUNG

(11) **EP 2 469 127 A1**
(43) Veröffentlichungstag der Anmeldung: **27.06.2012**
(21) Anmeldenummer: 11186379.1
(22) Anmeldetag: 24.10.2011
(51) Int. Cl.: F16H 57/021, F16H 48/06, F16H 48/30

(54) **Antriebsvorrichtung für Kraftfahrzeuge**

(30) Priorität: 21.12.2010 DE 102010055413
(71) Anmelder: Schaeffler Technologies AG & Co. KG, 91074 Herzogenaurach (DE)
(72) Erfinder: Smetana, Tomas, 91074 Herzogenaurach (DE); Klinger, Markus, 91781 Weißenburg (DE)

(57) **Zusammenfassung**

Die Erfindung betrifft eine Antriebsvorrichtung (1) für Kraftfahrzeuge mit einem Antriebsaggregat (2), das über ein Differenzialgetriebe (3) mit zwei Abtriebswellen (4, 5) wirkverbunden ist und mit einem Winkeltrieb (22), über welchen die Antriebsvorrichtung (1) mit einer Antriebswelle (23) wirkverbunden ist, wobei das Antriebsaggregat (2) einen Rotor (9) einer elektrischen Maschine (7) aufweist, welcher mit dem Differenzialgetriebe (3) wirkverbunden ist und wobei der Winkeltrieb (22) durch eine mittels der Antriebswelle (23) antreibbaren Ritzelwelle (24) und durch ein mit einem Ritzelkopf (25) der Ritzelwelle (24) im Zahneingriff stehendes Tellerrad (26) gebildet ist und dabei eine Rotationsachse (27) der Ritzelwelle (24) quer zu einer Rotationsachse (21) des Rotors (9) und des Tellerrades (26) verläuft.

## Beschreibung

### Gebiet der Erfindung

Die Erfindung betrifft eine Antriebsvorrichtung für Kraftfahrzeuge mit einem Antriebsaggregat, das über ein Differenzialgetriebe mit zwei Abtriebswellen wirkverbunden ist und mit einem Winkeltrieb, über welchen die Antriebsvorrichtung mit einer Antriebswelle wirkverbunden ist, wobei das Antriebsaggregat einen Rotor einer elektrischen Maschine aufweist, welcher mit dem Differenzialgetriebe wirkverbunden ist und wobei der Winkeltrieb durch eine mittels der Antriebswelle antreibbaren Ritzelwelle und durch ein mit einem Ritzelkopf der Ritzelwelle im Zahneingriff stehendes Tellerrad gebildet ist und dabei eine Rotationsachse der Ritzelwelle quer zu einer Rotationsachse des Rotors und des Tellerrades verläuft,.

### Hintergrund der Erfindung

Eine derartige Antriebsvorrichtung ist in DE 10 2004 024 086 A1 beschrieben. Diese Antriebsvorrichtungen werden vorzugsweise in Hybridfahrzeugen zum Antrieb von Fahrzeugachsen eingesetzt. Die Antriebswelle ist dementsprechend die Kardanwelle oder eine Zwischenwelle zwischen einem Verteilergetriebe und der Antriebsvorrichtung, an deren Ende üblicherweise der Ritzelkopf des Winkeltriebs ausgebildet ist. Für eine derartige Anordnung muss genügend Bauraum in der Umgebung der angetriebenen Achse zur Verfügung stehen, der nicht immer in jedem Fall vorhanden ist. Die Anordnung ist aufgrund des Winkeltriebs relativ kompliziert und aufwändig herzustellen.

Die Aufgabe der Erfindung ist es daher, eine Antriebsvorrichtung zu schaffen, mit welcher die Probleme beseitigt werden sollen, die im Zusammenhang mit beengten Bauraum in der Umgebung einer mit der Antriebsvorrichtung angetriebenen Achse auftretenden und die sich einfach und kostengünstig herstellen sowie montieren lässt.

Die Aufgabe wurde mit den Merkmalen des Anspruchs 1 gelöst.

Erfindungsgemäß ist die Ritzelwelle mit wenigstens zwei Drehlagern in einem ersten Gehäuse aufgenommen, welches separat zu einem wenigstens das Tellerrad umhausenden zweiten Gehäuse ausgebildet ist. Zumindest ein Teil des Ritzelkopfes taucht zwecks Zahneingriff mit dem Tellerrad in das zweite Gehäuse ein. Das Gehäuse, in dem die Ritzelwelle aufgenommen ist, kann auch ein Gehäusedeckel und/oder wahlweise einteilig oder mehrteilig zusammengesetzt ausgebildet sein. Der Deckel/das Gehäuse wird mit einer Öffnung auf das zweite Gehäuse aufgesetzt und befestigt. Die Ritzelwelle ist mit den Lagern, vorzugsweise Wälzlagern wie beispielsweise mit vorgespannten Schräglagern, mit dem ersten Gehäuse zu einer Baueinheit vormontiert, wobei das Gehäuse auch noch weitere Getriebebauteile aufweisen kann. Erstes und zweites Gehäuse sind wahlweise aus dem gleichen oder aus unterschiedlichen Werkstoffen gefertigt und aus Stahl oder Leichtmetall. Der Einsatz von Kunststoffen als Werkstoff für die Gehäuse ist ebenso denkbar wie die Verwendung mehrerer unterschiedlicher Werkstoffe für das jeweilige Gehäuse.

Das zweite Gehäuse nimmt zum Beispiel die elektrische Maschine, das Tellerrad des Winkeltriebs und weitere getriebliche Anordnungen und das Differenzial auf und kann einteilig oder mehrteilig ausgebildet sein. Das Gehäuse mit der Ritzelwelle wird in diesem Fall auf die ansonsten fertig montierte Antriebsvorrichtung aufgesetzt, eingesetzt oder eingepresst und vorzugsweise lösbar befestigt. Dazu taucht zumindest der Ritzelkopf in das zweite Gehäuse ein und steht im Zahneingriff mit dem vom zweiten Gehäuse umhausten Tellerrad.

Die erfindungsgemäße Anordnung erleichtert die Montage der Antriebsvorrichtung. Die Ritzelwelle und deren Lagerung sind nach der Montage des ersten Gehäuses an das zweite Gehäuse integraler Bestandteil einer kompakten Antriebsvorrichtung, die in die Achse eingesetzt werden kann und die dann mit einer Antriebswelle, beispielsweise mit einer Kardanwelle, verbunden wird. Darüber hinaus ist die Gehäusestruktur durch die mindestens Zweiteiligkeit einfach ausgeführt, so dass die Herstellung der Gehäuseteile sich kostengünstiger gestalten lässt. Weiterhin können die Haupteinheit mit Elektromotor, getrieblicher Einrichtung und Differenzial und das Gehäuse mit Ritzelwelle zunächst getrennt, beispielsweise an unterschiedlichen Fertigungsorten und bei verschiedenen Herstellern, hergestellt und montiert werden. So ist es denkbar, dass die Ritzelwelle mit Wälzlagerungen bei einem Wälzlagerhersteller hergestellt und montiert wird, der die fertige Vormontageeinheit dann an einen Getriebehersteller oder Fahrzeughersteller liefert, wo die Antriebsvorrichtung dann zusammen montiert werden kann.

Eine Ausgestaltung der Erfindung sieht vor, dass das erste Gehäuse teilweise in das zweite Gehäuse eintaucht. Auf diese Weise ist es möglich die Antriebsvorrichtung so kompakt wie möglich zu gestalten und den Bauraum, den eine derartige Antriebsvorrichtung benötigt, so gering wie möglich zu halten. So ist es denkbar, dass Teile des Gehäuses, in denen ein Lager der Ritzelwelle aufgenommen ist, mit in das zweite Gehäuse eintauchen und somit nicht das Gesamtvolumen des Bauraums für die Antriebsvorrichtung beeinflussen. Dadurch ergibt sich ein weiterer Vorteil der Erfindung, durch den Bauraum für die Lagerung der Ritzelwelle gespart werden kann.

Eine Ausgestaltung der Erfindung sieht vor, dass erste Gehäuse rohrartig ausgebildet ist. Die Lager für die Ritzelwelle werden in das rohrartig ausgebildete hohlzylindrische Bauteil mit der Ritzelwelle eingesetzt, so dass sich eine sogenannte Lagerpatrone für Ritzelwellen ergibt. Die Herstellung derartiger Anordnungen ist einfach und kostengünstig. Als Werkstoff für ein derartig ausgebildetes Gehäuse sind zum Beispiel Stahl, Leichtmetall, Kunststoff oder Mischformen der Materialien vorgesehen.

Eine Ausgestaltung der Erfindung sieht vor, dass das die Ritzelwelle und deren Lager aufnehmende erste Gehäuse in einem dritten Gehäuse aufgenommen ist, wobei das beispielsweise als Gehäusehälfte oder Gehäusedeckel ausgebildete dritte Gehäuse auf das zweite Gehäuse aufgesetzt, alternativ angeflanscht oder in dieses wenigstens teilweise eingesteckt und vorzugsweise lösbar befestigt wird. Eine derartige Anordnung bietet unter anderem dem Vorteil, dass der Einfluss der unterschiedlichen Wärmedehnungen von Leichtmetallen und Stahl auf das Spiel der vorgespannten Lageranordnung der Ritzelwelle ausgeschlossen werden kann. Üblicherweise lockern sich die Sitze Lagern aus Stahl in Sitzen der Gehäuse aus Leichtmetalllegierungen, wenn die Temperaturen in der Antriebsvorrichtung steigen. Darüber hinaus lockert sich das Spiel vorgespannter Schräglageranordnungen. Wenn die Lager aus Stahl beispielsweise in einem ersten Gehäuse aus Stahl gelagert werden, ist der zuletzt genannte Effekt ausgeschlossen, da der Lagersitz die Werkstoffe Stahl in Stahl vorsieht.

Die Erfindung sieht weiter vor, dass eine Rotationsachse der Antriebswelle und die Rotationsachse der Ritzelwelle achsparallel mit Abstand zueinander verlaufen. Eine koaxiale Übereinstimmung der Rotationsachsen des Antriebswelle und der Ritzelwelle bzw. des Ritzelkopfes ist damit nicht mehr zwingend notwendig, weil die Antriebswelle und die Ritzelwelle erfindungsgemäß getrieblich miteinander in Wirkverbindung stehen. Das Differenzial und das Antriebsaggregat können an den vorhandenen Bauraum in der Umgebung der Achse angepasst auch mit Versatz der Eingangswelle (Ritzelwelle) zur Antriebswelle angeordnet werden.

Eine getriebliche Wirkverbindung ist eine Leistungen übertragenden Verbindung. Beispiele dafür sind in diesem Fall Riemen- oder Kettentriebe oder, wie eine Ausgestaltung der Erfindung vorsieht, sind miteinander im Zahneingriff stehende Zahnräder. Der Achsabstand der Zahnräder entspricht dem achsparallelen Versatz zwischen der Rotationsachse der Antriebswelle und der Rotationsachse der Ritzelwelle. Eines der Zahnräder, vorzugsweise mit gerader oder schräger Stirnverzahnung, sitzt beispielsweise fest oder unter Zwischenschaltung einer Freilaufkupplung, welche auch schaltbar sein kann, direkt auf der Antriebswelle. Das andere Zahnrad ist mit einer korrespondierenden Verzahnung versehen und sitzt vorzugsweise fest oder unter Zwischenschaltung einer Freilaufkupplung auf der Ritzelwelle. Das erste Gehäuse muss dementsprechend frei gemacht sein, damit der Zahneingriff der Zahnräder möglich ist. So sieht eine Ausgestaltung der Erfindung vor, dass das erste Gehäuse seitlich einen Durchbruch aufweist, der von dem Zahnrad der Antriebswelle durchgriffen ist, welches im Zahneingriff mit dem Zahnrad auf der Ritzelwelle im Zahneingriff steht.

Ein weiterer Vorteil der Erfindung liegt darin, dass mit der getrieblichen Verbindung an der Antriebswelle anliegende Leistungsparameter wie Drehzahlen und Drehmomente zur Ritzelwelle hin unter- oder übersetzt werden können, wodurch die Kennwerte der Antriebsvorrichtung zusätzlich zu den anderen Getriebestufen beeinflussbar und die Anordnung damit variabler gestaltbar ist. So sieht eine Ausgestaltung der Erfindung vor, dass ein Übersetzungsverhältnis der Zähnezahlen des zweiten Zahnrades zu dem ersten Zahnrad kleiner dem Zahlenswert 1 ist. Eine weitere Ausgestaltung der Erfindung sieht ein Übersetzungsverhältnis der Zähnezahlen des Tellerrades zu dem Ritzelkopf vor, welches größer dem Zahlenswert 1 ist.

### Beschreibung der Zeichnung

Die Erfindung wird nachfolgend anhand eines Ausführungsbeispieles näher erläutert.

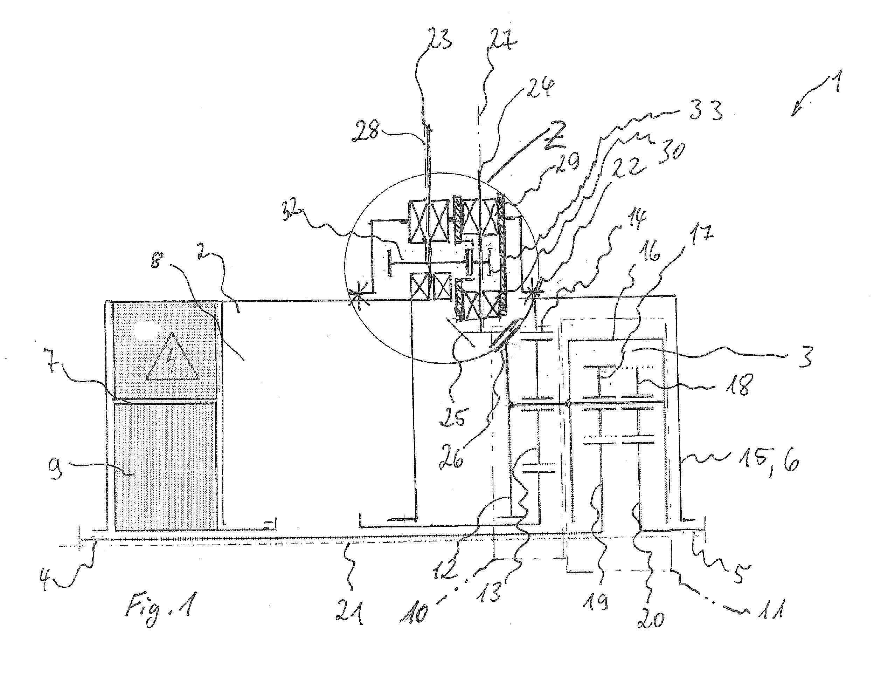

Figur 1 ist eine stark vereinfachte und nicht maßstäbliche schematische Darstellung einer Antriebsvorrichtung 1. Die Antriebsvorrichtung 1 für ein ansonsten nicht weiter dargestelltes Kraftfahrzeug ist mit einem Antriebsaggregat 2 versehen, das über ein Differenzialgetriebe 3 mit zwei Abtriebswellen 4 und 5 wirkverbunden ist. Das Antriebsaggregat 2 ist mindestens eine elektrische Maschine 7 und eine nicht näher beschriebene getriebliche Verbindung 8 zwischen dem Rotor 9 der elektrischen Maschine 7 und dem Differenzialgetriebe 3.

Das Differenzialgetriebe 3 ist in diesem Fall ein Planetengetriebe, kann aber auch ein klassisches Kegelraddifferenzial oder eine Mischform aus Planetensätzen und Elementen des Kegelraddifferenziales sein. Das Differenzialgetriebe 3 ist aus einer Planetenstufe 10 und dem eigentlichen Differenzial 11 gebildet. Die Planetenstufe 10 sieht einen Planetenträger 12 vor, an dem drehbar ein Satz Planetenräder 13 gelagert ist. Von dem Satz Planetenräder 13 ist nur eins dargestellt. Darüber hinaus weist die Planetenstufe 10 ein Hohlrad 14 auf, das fest gegenüber der Umgebung 15, beispielsweise gegenüber einem Gehäuse der Antriebsvorrichtung 1, abgestützt ist.

Das Differenzial 11 ist aus einem Differenzialkorb 16, welcher in diesem Fall ein weiterer Planetenträger ist, aus zwei Sätzen Planetenrädern 17 und 18 sowie aus zwei Sonnenrädern 19 und 20 gebildet. Die Planetenräder 17 sind um die eigene Achse drehbar an dem Differenzialkorb 16 drehbar gelagert, dabei steht jeweils ein Planetenrad 17 des einen Satzes mit einem Planetenrad 18 des anderen Satzes im Zahneingriff. Darüber hinaus steht jedes Planetenrad 17 des einen Satzes im Zahneingriff mit dem Sonnenrad 19 und jedes Planetenrad 18 im Zahneingriff mit dem Sonnenrad 20. Das Sonnenrad 19 ist um die Rotationsachse 21 drehfest mit der Abtriebswelle 4 gekoppelt. Die Abtriebswelle 4 ist mit einem nicht dargestellten Fahrzeugrad wirkverbunden. Das Sonnenrad 20 ist um die Rotationsachse 21 drehfest mit der Abtriebswelle 5 gekoppelt. Die Abtriebswelle 5 ist mit einem nicht dargestellten Fahrzeugrad wirkverbunden.

Die Antriebsvorrichtung 1 ist über einen Winkeltrieb 22 mit einer Antriebswelle 23 wirkverbunden. Der Winkeltrieb 22 weist eine mittels der Antriebswelle 23 antreibbaren Ritzelwelle 24 auf, auf welcher ein Ritzelkopf 25 sitzt. Der Ritzelkopf 25 ist ein Kegelzahnrad und steht im Zahneingriff mit der Verzahnung eines Tellerrades 26. Das Tellerrad 26 ist koaxial zur Rotationsachse 21 des Rotors 9 ausgerichtet an dem Planetenträger 12 befestigt. Die Rotationsachse 27 der Ritzelwelle 24 verläuft quer zu der Rotationsachse 21 des Rotors 9 und des Tellerrades 26. Die Rotationsachse 28 der Antriebswelle 23 und die Rotationsachse 27 der Ritzelwelle 24 verlaufen zueinander mit Abstand und zueinander achsparallel. Die Ritzelwelle 24 ist fliegend gelagert, was heißt, dass der Ritzelkopf 25 axial einseitig von zwei axial zueinander beabstandeten Lagerstellen 29 und 30 gestützt ist. Es ist auch denkbar, dass der Ritzelkopf an seinem freien Ende zusätzlich gelagert ist, so dass dieser axial zwischen zwei Lagerstellen abgestützt ist.

Die Antriebswelle 23 und die Ritzelwelle 24 stehen getrieblich miteinander in Wirkverbindung. Die getriebliche Verbindung ist eine Stirnradstufe aus zwei Zahnrädern 32 und 33, die miteinander im Zahneingriff stehen. Das Zahnrad 32 ist mit der Antriebswelle 23 drehfest verbunden und das andere Zahnrad 33 sitzt fest an der Ritzelwelle 24.

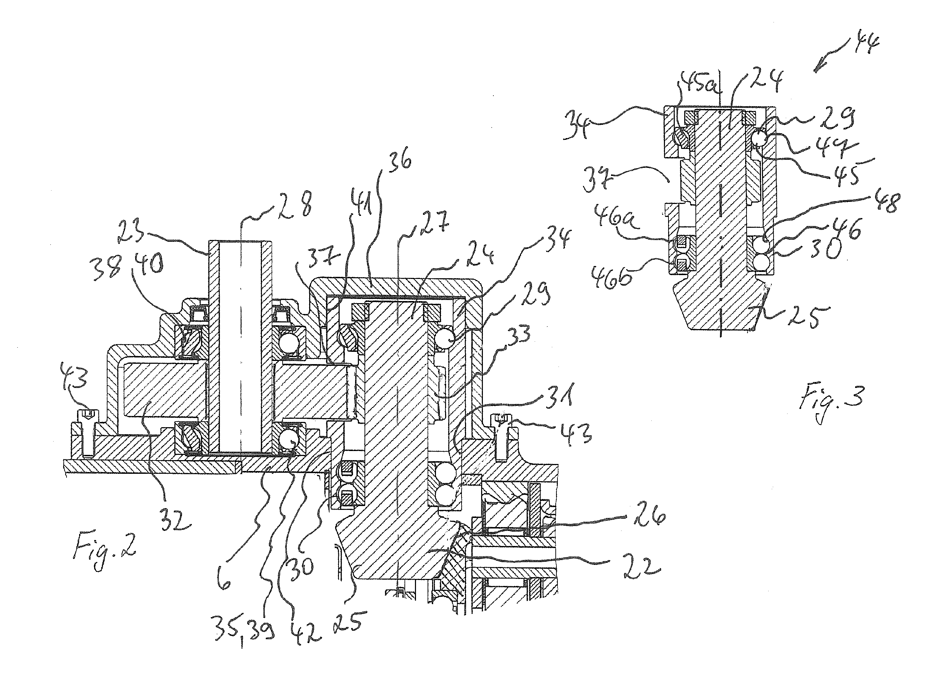

Figuren 1, 2 und 3: Figur 2 zeigt das Detail Z aus Figur 1 gegenständlich mit Winkeltrieb 22 und der Antriebswelle 23 in einem Längsschnitt entlang der Rotationsachsen 27 und 28. Figur 3 zeigt die Ritzelwelle 24, ein erstes Gehäuse 34 und die Lagerstellen 29 sowie 30 als Vormontageeinheit 44 in einem Längsschnitt entlang der Rotationsachse 28. Die Lagerstellen 29 und 30 sind in einem ersten Gehäuse 34 ausgebildet, in dem die Ritzelwelle 24 drehbar gelagert ist. Das erste Gehäuse 34 weist einen seitlichen Durchbruch 37 auf, der von dem ersten Zahnrad 32 durchgriffen wird. Die Antriebswelle 23 ist an zwei Lagerstellen 35 und 38 drehbar gelagert.
Figuren 2 und 3: Die Lagerstellen 35 und 38 sind durch Schrägwälzlager 39 und 40 des Typs Schrägkugellager gebildet. Eines der Schrägwälzlager 39 sitzt in einem zweiten Gehäuse 6, welches außerdem das Antriebsaggregat 2 und das Differenzialgetriebe 3 umhaust. Das andere Schrägwälzlager 40 ist in einem dritten Gehäuse 36 aufgenommen, das die Form eines Getriebedeckels aufweist. In dem dritten Gehäuse 36 ist auch das erste Gehäuse 34 mit der Ritzelwelle 24 aufgenommen. Wie aus Figur 2 hervorgeht, sitzt das erste Gehäuse 34 in zwei zylindrischen Sitzen 41 und 42 des dritten Gehäuses 36. Das dritte Gehäuse 36 ist auf das erste Gehäuse 34 so aufgesetzt, dass der Ritzelkopf 25 der Ritzelwelle 24 senkrecht durch eine Öffnung 31 des zweiten Gehäuses 6 hindurch in die Verzahnung des Tellerrads 26 eingreift. Das erste Gehäuse 34 ist dabei soweit in das zweite Gehäuse 6 eingesetzt, dass die Lagerstelle 30 in das zweite Gehäuse 6 hinein steht. Der seitliche Durchbruch 37 ist auf Höhe des Zahnrades 32, so dass dieses durch den Durchbruch 37 hindurch in die Verzahnung des Zahnrades 33 an der Ritzelwelle 24 eingreift. Das dritte Gehäuse 36 ist mittels Schrauben 43 mit dem zweiten Gehäuse 6 verschraubt.
Figur 3: Die Vormontageeinheit 44, eine sogenannte Lagerpatrone, weist an den Lagerstellen 29 und 30 Wälzlager des Typs Schrägwälzlager 45 und 46 auf. Das Schrägwälzlager 45 ist einreihig und Schrägwälzlager 46 ist zweireihig ausgebildet. Die jeweilige Außenlaufbahn 47 bzw. 48 des der jeweiligen Reihen 45a und 46a sowie 46b sind direkt in dem ersten Gehäuse 34 ausgebildet.

**Bezugszeichen**

| | | | |
|---|---|---|---|
| 1 | Antriebsvorrichtung | 27 | Rotationsachse |
| 2 | Antriebsaggregat | 28 | Rotationsachse |
| 3 | Differenzialgetriebe | 29 | Lagerstelle |
| 4 | Abtriebswelle | 30 | Lagerstelle |
| 5 | Abtriebswelle | 31 | Öffnung |
| 6 | zweites Gehäuse | 32 | Zahnrad |
| 7 | elektrische Maschine | 33 | Zahnrad |
| 8 | getriebliche Verbindung | 34 | erstes Gehäuse |
| 9 | Rotor | 35 | Vormontageeinheit |
| 10 | Planetenstufe | 36 | drittes Gehäuse |
| 11 | Differenzial | 37 | Durchbruch |
| 12 | Planetenträger | 38 | Lagerstelle |
| 13 | Planetenrad | 39 | Schrägwälzlager |
| 14 | Hohlrad | 40 | Schrägwälzlager |
| 15 | Umgebung | 41 | Sitz |
| 16 | Differenzialkorb | 42 | Sitz |
| 17 | Planetenrad | 43 | Schrauben |
| 18 | Planetenrad | 44 | Vormontageeinheit |
| 19 | Sonnenrad | 45 | Schrägwälzlager |
| 20 | Sonnenrad | 45a | Reihe |
| 21 | Rotationsachse | 46 | Schrägwälzlager |
| 22 | Winkeltrieb | 46a | Reihe |
| 23 | Antriebswelle | 46b | Reihe |
| 24 | Ritzelwelle | 47 | Außenlaufbahn |
| 25 | Ritzelkopf | 48 | Außenlaufbahn |
| 26 | Tellerrad | | |
| | | | |
| | | | |

## Patentansprüche

1. Antriebsvorrichtung (1) für Kraftfahrzeuge mit einem Antriebsaggregat (2), das über ein Differenzialgetriebe (3) mit zwei Abtriebswellen (4, 5) wirkverbunden ist und mit einem Winkeltrieb (22), über welchen die Antriebsvorrichtung (1) mit einer Antriebswelle (23) wirkverbunden ist, wobei das Antriebsaggregat (2) einen Rotor (9) einer elektrischen Maschine (7) aufweist, welcher mit dem Differenzialgetriebe (3) wirkverbunden ist und wobei der Winkeltrieb (22) durch eine mittels der Antriebswelle (23) antreibbaren Ritzelwelle (24) und durch ein mit einem Ritzelkopf (25) der Ritzelwelle (24) im Zahneingriff stehendes Tellerrad (26) gebildet ist und dabei eine Rotationsachse (27) der Ritzelwelle (24) quer zu einer Rotationsachse (21) des Rotors (9) und des Tellerrades (26) verläuft, **dadurch gekennzeichnet, dass** die Ritzelwelle (24) mit wenigstens zwei Drehlagern (35, 36) in einem ersten Gehäuse (34) aufgenommen ist, wobei das erste Gehäuse (34) separat zu einem wenigstens das Tellerrad (26) umhausenden zweiten Gehäuse (6) ausgebildet ist und wobei zumindest ein Teil des Ritzelkopfes (25) zwecks Zahneingriff mit dem Tellerrad (26) in das zweite Gehäuse (6) eintaucht.

2. Antriebsvorrichtung nach Anspruch 1, **dadurch gekennzeichnet, dass** das erste Gehäuse (34) teilweise in das zweite Gehäuse (6) eintaucht.

3. Antriebsvorrichtung nach Anspruch 1, **dadurch gekennzeichnet, dass** das erste Gehäuse (34) rohrartig ausgebildet ist.

4. Antriebsvorrichtung nach Anspruch 1, **dadurch gekennzeichnet, dass** das erste Gehäuse(34) in einem dritten Gehäuse (36) aufgenommen ist, wobei das dritte Gehäuse (36) mit dem zweiten Gehäuse (6) verbunden ist.

5. Antriebsvorrichtung nach Anspruch 1, **dadurch gekennzeichnet, dass** die Drehlager Wälzlager sind.

6. Antriebsvorrichtung nach Anspruch 1, **dadurch gekennzeichnet, dass** eine Rotationsachse (28) der Antriebswelle (23) und die Rotationsachse (27) der Ritzelwelle (24) achsparallel mit Abstand zueinander verlaufen und dass die Antriebswelle (23) und die Ritzelwelle (24) getrieblich miteinander in Wirkverbindung stehen, in dem ein von der Antriebswelle (23) antreibbares erstes Zahnrad (32) im Zahneingriff mit einem wenigstens in eine Rotationsrichtung um die Rotationsachse (27) der Ritzelwelle (24) drehfest mit der Ritzelwelle (24) gekoppelten zweiten Zahnrad (33) im Zahneingriff steht.

7. Antriebsvorrichtung nach Anspruch 6, **dadurch gekennzeichnet, dass** das erste Zahnrad (32) zwecks Zahneingriff mit dem zweiten Zahnrad (33) zumindest teilweise in das erste Gehäuse (34) eintaucht.

8. Antriebsvorrichtung nach Anspruch 6 oder 7, **dadurch gekennzeichnet, dass** das erste Gehäuse(34) in einem dritten Gehäuse (36) aufgenommen ist und dass zumindest das erste Zahnrad (32) in dem dritten Gehäuse (36) drehbar wenigstens einseitig gelagert ist, wobei das dritte Gehäuse (36) mit dem zweiten Gehäuse (6) verbunden ist.

9. Antriebsvorrichtung nach Anspruch 7, **dadurch gekennzeichnet, dass** das erste Gehäuse (34) rohrförmig ausgebildet ist und dass das erste Gehäuse (34) einen seitlichen Durchbruch (37) aufweist, den ein Teil des zweiten Zahnrads (33) durchgreift.
